# EUROPEAN PATENT APPLICATION

(11) **EP 3 817 478 A1**
(43) Date of publication of application: **05.05.2021**
(21) Application number: 19808281.0
(22) Date of filing: 22.05.2019
(51) Int. Cl.: H04W 72/04, H04W 28/04, H04W 72/12

(54) **USER TERMINAL AND WIRELESS COMMUNICATION METHOD**

(30) Priority: 22.05.2018 JP 2018109844
(71) Applicant: NTT DOCOMO, INC., Tokyo (JP)
(72) Inventor: YOSHIOKA, Shohei, Tokyo 100-6150 (JP); MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2019/020296
(87) International publication number: WO 2019/225654

(57) **Abstract**

To secure processing time even when a plurality of UL channels are simultaneously transmitted for UCI transmission. A user terminal according to an aspect of the present disclosure includes: a transmitting section that multiplexes and transmits uplink control information (UCI) on at least one of a plurality of uplink channels that overlap in a slot; and a control section that predicts that the first symbol that is the earliest uplink channel among the plurality of uplink channels is not before symbol N₁+X after a last symbol of any corresponding downlink shared channel (PDSCH), and is not before symbol N₂+Y after the last symbol of any corresponding downlink control channel (PDCCH), and here, determines either or both of the X and the Y on the basis of a length of the UCI to be multiplexed.

## Description

### Technical Field

The present disclosure relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see Non-Patent Literature 1). In addition, the specifications of LTE-A (LTE Advanced, LTE Rel. 10, 11, 12, 13) have been drafted for the purpose of further increasing the capacity and sophistication of LTE (LTE Rel. 8, 9).

Successor systems of LTE (for example, FRA (Future Radio Access), 5G (5th generation mobile communication system), 5G+ (plus), NR (New Radio), NX (New radio access), FX (Future generation radio access), LTE Rel. 14 or 15 or later versions) are also under study.

In existing LTE systems (for example, LTE Rel. 8 to 13), a user terminal (User Equipment (UE)) transmits uplink control information (UCI) by using at least one of a UL data channel (for example, Physical Uplink Shared Channel (PUSCH)) and a UL control channel (for example, a PUCCH (Physical Uplink Control Channel).

For example, the UCI may include retransmission control information (also referred to as Hybrid Automatic Repeat reQuest Acknowledgment (HARQ-ACK), ACK/NACK, A/N or the like) for downlink shared channel (Physical Downlink Shared Channel (PDSCH)), scheduling request (SR), channel state information (CSI), and the like.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), when transmitting a plurality of UL channels (PUCCH+PUCCH, PUCCH+PUSCH, or the like) at the same time for UCI transmission, it is considered to specify parameters to secure the processing time of the UE. There has been little progress on how to determine the values of these parameters. If these values are not properly determined, there is a problem that the communication throughput will decrease.

Therefore, it is an object of the present disclosure to provide a user terminal and a radio communication method that can secure processing time even when a plurality of UL channels are transmitted simultaneously for UCI

### transmission.

### Solution to Problem

A user terminal according to an aspect of the present disclosure includes: a transmitting section that multiplexes and transmits uplink control information (UCI) on at least one of a plurality of uplink channels that overlap in a slot; and a control section that predicts that the first symbol that is the earliest uplink channel among the plurality of uplink channels is not before symbol N₁+X after a last symbol of any corresponding downlink shared channel (PDSCH), and is not before symbol N₂+Y after the last symbol of any corresponding downlink control channel (PDCCH), and here, determines either or both of the X and the Y on the basis of a length of the UCI to be multiplexed.

### Advantageous Effects of Invention

According to an aspect of the present disclosure, processing time can be secured even when a plurality of UL channels are simultaneously transmitted for UCI transmission.

### Brief Description of Drawings

Fig. 1 is a conceptual explanatory diagram of X and Y.
Fig. 2 is a diagram to show an example of a schematic structure of a radio communication system according to one embodiment.
Fig. 3 is a diagram to show an example of an overall structure of a radio base station according to one embodiment.
Fig. 4 is a diagram to show an example of a functional structure of a radio base station according to one embodiment.
Fig. 5 is a diagram to show an example of an overall structure of a user terminal according to one embodiment.
Fig. 6 is a diagram to show an example of a functional structure of a user terminal according to one embodiment.
Fig. 7 is a diagram to show an example hardware structure of a radio base station and a user terminal according to one embodiment.

### Description of Embodiments

In NR, PDSCH processing time, PUSCH processing time, and the like are being studied. Note that the processing time may be read as preparation time, preparation procedure time, processing procedure time, or the like.

The PDSCH processing time may be a period from the end of the last symbol of the PDSCH transmitting the transport block to symbol UL. The UE may provide a valid HARQ-ACK with a symbol that is the same as or later than symbol UL.

The processing time of the PUSCH may be a period from the end of the last symbol of the downlink control channel (Physical Downlink Control Channel (PDCCH)) transmitting the downlink control information (DCI) for scheduling the PUSCH to symbol UL. The UE may transmit the PUSCH with a symbol that is the same as or later than the symbol UL.

The PDSCH processing time may be determined on the basis of a parameter N₁ (which may be referred to as PDSCH decoding time), and the PUSCH processing time may be determined on the basis of a parameter N₂ (which may be referred to as PUSCH preparation time). N₁ may be referred to as PDSCH processing time for PDSCH processing capability 1. N₂ may be referred to as the PUSCH preparation time for PUSCH timing capability 1.

N₁ may be determined on the basis of the downlink SCS in which the PDSCH has been transmitted and the SCS of the UL channel (for example, PUCCH, PUSCH) in which the HARQ-ACK is transmitted. For example, N₁ may be determined on the basis of the smallest SCS of these SCSs, and may be determined to be symbol 8-20, such as symbol 8 if the smallest SCS is 15 kHz, for example. N₁ may be determined to be symbol 13-24 when additional PDSCH DMRS is set.

N₂ may be determined on the basis of the downlink SCS in which the PDCCH transmitting the DCI for scheduling the PUSCH has been transmitted, and the SCS in the UL channel in which the PUSCH is transmitted. For example, N₂ may be determined on the basis of the smallest SCS of these SCSs, and may be determined to be symbol 10-36, such as symbol 10 if the smallest SCS is 15 kHz, for example.

That is, the processing time (and the parameters related to the processing time (N₁, N₂, or the like)) may be according to the value defined by numerology corresponding to the smallest SCS among PDCCH/PDSCH and PUCCH/PUSCH. In other words, N₁ and N₂ are defined as common values among CCs having different numerology even when the numerology mixed CA is set.

Note that the PDSCH processing time may be determined on the basis of parameters such as d_{1,1}, d_{1,2}, d_{1,3} in addition to N₁. The PUSCH processing time may be determined on the basis of parameters such as d_{2,1}, d_{2,2}, in addition to N₂.

Here, d_{1,1} may be 0 when the HARQ-ACK is transmitted in the PUCCH and may be 1 when the HARQ-ACK is transmitted in the PUSCH. d_{1,2} may be a value based on the maximum timing difference between component carriers when the UE is set with a plurality of active component carriers, and may be 0 in other cases. d_{1,3} may be 7-i when the PDSCH is the mapping type A and the last symbol of the PDSCH is the i-th (i<7) symbol of the slot, and may be 0 in other cases.

d_{2,1} may be 0 when the first symbol of the PUSCH allocation includes only DMRS and may be 1 in other cases. d_{2,2} may be a value based on the maximum timing difference between component carriers when the UE is set with a plurality of active component carriers, and may be 0 in other cases.

When the HARQ-ACK corresponding to the PDSCH is transmitted using the PUSCH, the UE may transmit the PUSCH with the symbol UL after the time (sum time) that combines the processing time of the PDSCH and the processing time of the PUSCH, or the symbol later than the PUSCH.

By the way, when transmitting a plurality of UL channels (PUCCH+PUCCH, PUCCH+PUSCH, or the like) simultaneously, it is considered to secure the processing time of the UE. Note that, in the present disclosure, "transmit" may be read as "located", "multiplexed", "assigned", "mapped", or the like.

For example, when a UE transmits a plurality of overlapping PUCCHs without repetitions in a slot (may be expressed as transmits a plurality of PUCCHs simultaneously), the UE may be set to multiplex a plurality of different UCI types by the plurality of PUCCHs, respectively. The UE may be set to multiplex a plurality of different UCI types on one PUCCH.

For example, when the HARQ-ACK of the first PUCCH resource collides with the CSI of the second PUCCH resource, on the basis of the payload size of the combined HARQ-ACK and CSI, the UE may determine a third PUCCH resource for multiplexing and transmitting the combined HARQ-ACK and CSI.

The UE may not transmit the PUSCH overlapping the PUCCH in the slot. The UE may multiplex all corresponding UCI types on one PUCCH. Note that the "corresponding UCI types" may mean "a plurality of corresponding UCI types", "(a plurality of) UCI types transmitted in the slot", or the like.

Note that the UCI type may indicate any or combination of HARQ-ACK, SR (positive SR, negative SR), periodic CSI (P-CSI), semi-persistent CSI (SP-CSI), and aperiodic CSI (A-CSI) (note that the CSI may include CSI Part 1, CSI Part 2, or the like).

If one of the plurality of UCI types includes HARQ-ACK, the UE may expect that, in the overlapping PUCCHs in the slot including the determined PUCCH resource for the multiplexed UCI, the first symbol of the earliest PUCCH is not before symbol N₁+X after a last symbol of the corresponding any PDSCH (or SPS PDSCH), and is not before a symbol N₂+Y after the last symbol of the corresponding any PDCCH.

Here, N₁ may represent the above-mentioned N₁ (for example, the number of symbols corresponding to the PDSCH reception time for PDSCH processing capability 1). N₂ may represent the above-mentioned N₂ (for example, the number of symbols corresponding to the PUSCH preparation time for PUSCH processing capability 1).

Note that the "slot" in the present disclosure may be read as "symbol", "subframe", "half slot", or the like.

N₁+X may correspond to the time from the last symbol of the corresponding PDSCH to the first symbol of the PUCCH. N₂+Y may correspond to the time from the last symbol of the corresponding PDCCH (DCI) to the first symbol of the PUCCH. X and Y correspond to values for securing the processing time of the UE. X may be referred to as a time parameter between PDSCH and PUCCH, and Y may be referred to as a time parameter between PDCCH and PUCCH.

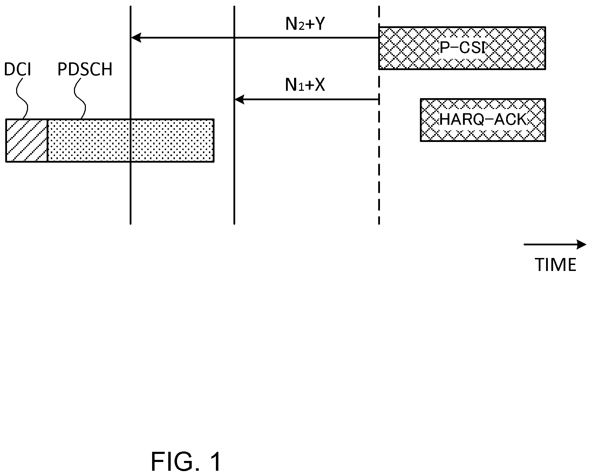

Fig. 1 is a conceptual explanatory diagram of X and Y. Fig. 1 shows an example in which the PDSCH is scheduled by DCI (DL DCI) and the PUCCH for transmitting HARQ-ACK corresponding to the PDSCH and the PUCCH for transmitting P-CSI overlap. Of these two PUCCHs, the earliest PUCCH is the PUCCH for P-CSI.

In Fig. 1, from the first symbol of the PUCCH for P-CSI to the last symbol of any PDSCH corresponding to the UCI transmitted on these PUCCHs, it is larger than N₁+X. In Fig. 1, the time from the first symbol of PUCCH for P-CSI to the last symbol of any PDCCH corresponding to UCI transmitted on these PUCCHs is larger than N₂+Y. Therefore, in the example of Fig. 1, the UE meets the processing time requirements of each channel and can handle simultaneous transmission of these PUCCHs without problems.

When the UE transmits one or a plurality of overlapping PUCCH and PUSCH (may be expressed as transmits PUCCH and PUSCH simultaneously) without repetition in a slot, the UE may multiplex all corresponding UCI types in one PUSCH.

The UE may expect that, in the overlapping PUCCHs and PUSCHs in the slot including the determined PUCCH resource for the multiplexed UCI, the first symbol of the earliest PUCCH and/or PUSCH is not before symbol N₁+X after a last symbol of the corresponding any PDSCH (or SPS PDSCH), and is not before symbol N₂+Y after the last symbol of the corresponding any PDCCH.

N₁+X may correspond to the time from the last symbol of the corresponding PDSCH to the first symbol of the PUCCH and/or PUSCH. N₂+Y may correspond to the time from the last symbol of the corresponding PDCCH (DCI) to the first symbol of the PUCCH and/or PUSCH. X and Y correspond to values for securing the processing time of the UE. X may be referred to as a time parameter between PDSCH and PUCCH (and/or PUSCH), and Y may be referred to as a time parameter between PDCCH and PUCCH (and/or PUSCH).

Note that "is not before symbol N₁+X after a last symbol" may be read as "is (for example, positioned, multiplexed, assigned, mapped, transmitted) in or after symbol N₁+X after the last symbol". "is not before symbol N₂+Y after a last symbol" may be read as "is (for example, positioned, multiplexed, assigned, mapped, transmitted) in or after symbol N₂+Y after the last symbol".

However, there has been little progress on how to determine the X and Y values. If these values are not properly determined, there is a problem that the communication throughput will decrease.

Therefore, the present inventors have come up with a method of determining the values of X and Y.

Hereinafter, embodiments according to the present disclosure will be described in detail with reference to the drawings. The radio communication method according to each of the embodiments may be applied independently, or may be applied in combination with others.

### (Radio Communication Method)

In one embodiment, the UE may determine either or both of X and Y on the basis of the length of UCI to be transmitted (UCI length). In the present disclosure, the UCI length may be read as at least one of UCI size, UCI bit number, encoding bit number, payload size, and the like.

The UCI length here may be read as the length of the UCI transmitted (or scheduled to be transmitted) in one of a plurality of overlapping PUCCHs (or overlapping PUCCHs and PUSCHs), or may be read as a length based on both of the UCIs transmitted in both (for example, total length).

The UE may determine a UCI coding method on the basis of the UCI length. Therefore, the UE may determine one or both of X and Y on the basis of the coding method of the UCI to be transmitted.

For example, the encoding method may be a repetition code or a simplex code when the UCI length is equal to or greater than one and less than a first threshold (for example, three), may be a Reed-Muller code (RM code) when the UCI length is equal to or greater than the first threshold and less than a second threshold (for example, 12), and may be a polar code when the UCI length is equal to or greater than the second threshold.

The UE may assume that at least one of X and Y increases as the UCI length increases, or assume that at least one of X and Y decreases as the UCI length increases. The UE may determine the values of X and Y independently, or may determine one of the values on the basis of the other value.

In both cases of transmitting a plurality of overlapping PUCCH, and transmitting overlapping PUCCH and PUSCH, the UE may assume that either or both X and Y are determined on the basis of the length of UCI to be transmitted (UCI length).

When transmitting a plurality of overlapping PUCCH, the UE may assume that either or both of X and Y are determined on the basis of the length of the UCI to be transmitted (UCI length), and when transmitting overlapping PUCCH and PUSCH, the UE may determine either or both of X and Y using another method. That is, the UE may use different determination methods for at least one of X and Y on the basis of whether the UCI transmission is of a PUCCH simultaneous transmission slot or a PUCCH and PUSCH simultaneous transmission slot.

For example, when transmitting a plurality of overlapping PUCCHs, the UE may determine either or both of X and Y on the basis of the UCI length, and when transmitting overlapping PUCCH and PUSCH, the UE may determine either or both of X and Y on the basis of any one or a combination of the above-described d_{1,1}, d_{1,2}, d_{1,3}, d_{2,1}, and d_{2,2}.

When transmitting a plurality of overlapping PUCCHs, the UE may determine either or both of X and Y on the basis of the UCI length, and when transmitting the overlapping PUCCH and PUSCH, the UE may determine either or both of X and Y on the basis of a base graph of a Low-Density Parity-check (LDPC) code used for PUSCH transmission.

Note that the UE may use the LDPC code for PUSCH transmission. For example, regarding the initial transmission of a transport block of a coding rate R indicated by a Modulation and Coding Scheme (MCS) index and subsequent retransmission of the same transport block, each code block of the transport block is encoded by the LDPC base graph 1 or 2. When the payload size of PUSCH is A (bit), if A is equal to or less than 292, or A is equal to or less than 3824 and R is equal to or less than 0.67, or R is equal to or less than 0.25, the UE may use the LDPC base graph 2 in the encoding of the PUSCH, and may use the LDPC base graph 1 in other cases.

The UE may assume that at least one of X and Y is larger when the LDPC base graph 2 is used in the encoding of the PUSCH than when the LDPC base graph 1 is used. The UE may assume that at least one of X and Y is larger when the LDPC base graph 1 is used in the encoding of the PUSCH than when the LDPC base graph 2 is used.

When transmitting a plurality of overlapping PUCCHs, the UE may determine either or both of X and Y on the basis of the UCI length, and when transmitting overlapping PUCCH and PUSCH, the UE may determine either or both of X and Y on the basis of both the base graph of the LDP code used for PUSCH transmission and the UCI length.

According to the embodiment described above, the UE can appropriately determine the values of X and Y and perform the transmission and reception processing.

### <Modification>

Note that the information for determining at least one of X and Y may be provided in notification (set, given in instruction) to the UE using higher layer signaling, physical layer signaling (for example, DCI), or a combination thereof.

Here, the higher layer signaling may be, for example, any of radio resource control (RRC) signaling, medium access control (MAC) signaling, broadcast information, and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), a minimum system information (Remaining Minimum System Information (RMSI)), other system information (OSI), or the like.

The base station may perform PUCCH and/or PUSCH reception processing (decoding, demodulation, demapping, and the like) assuming either or both of X and Y determined by the UE.

### (Radio Communication System)

Now, the structure of a radio communication system according to the embodiment of the present disclosure will be described below. In this radio communication system, communication is performed using at least one of or a combination of the radio communication methods described in the embodiments described above.

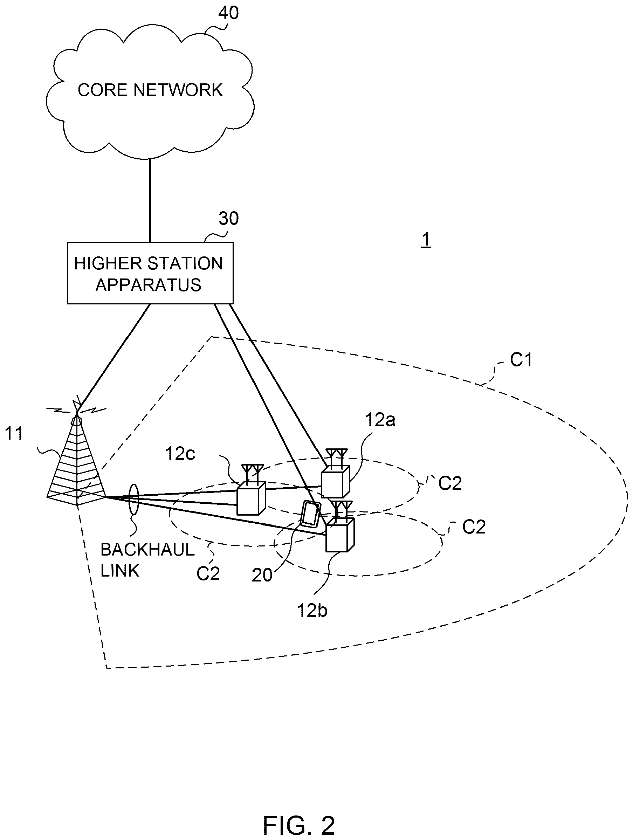

Fig. 2 is a diagram to show an example of a schematic structure of a radio communication system according to one embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

The radio communication system 1 may be referred to as long term evolution (LTE), LTE-Advanced (LTE-A), LTE-beyond (LTE-B), SUPER 3G, IMT-Advanced, 4th generation mobile communication system (4G), 5th generation mobile communication system (5G), new radio (NR), future radio access (FRA), new-radio access technology (RAT), and the like, or may be referred to as a system that achieves these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement, number, and so on of cells and user terminals 20 are not limited to those illustrated in the drawings.

The user terminals 20 can connect with both the radio base station 11 and the radio base stations 12. The user terminals 20 may use the macro cell C1 and the small cells C2 simultaneously using CA or DC. Furthermore, the user terminals 20 may apply CA or DC using a plurality of cells (CCs) (for example, five or fewer CCs or six or more CCs) .

Between the user terminals 20 and the radio base station 11, communication can be carried out using a carrier of a relatively low frequency band (for example, 2 GHz) and a narrow bandwidth (referred to as an "existing carrier", a "legacy carrier", and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

Moreover, the user terminal 20 can perform communication in each cell using time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, and so on.

For example, for a certain physical channel, when the subcarrier spacing differs and/or the numbers of OFDM symbols are different between the constituent OFDM symbols, this case may be described that they are different in numerology.

The radio base station 11 and the radio base station 12 (or between 2 radio base stations 12) may be connected by wire (for example, means in compliance with the common public radio interface (CPRI) such as optical fiber, an X2 interface, and so on) or wirelessly.

The radio base station 11 and the radio base station 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME), and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station", a "central node", an "eNodeB (eNB)", a "transmitting/receiving point", and so on. Also, the radio base stations 12 are radio base stations having local coverages, and may be referred to as "small base stations", "micro base stations", "pico base stations", "femto base stations", "home eNodeBs (HeNBs)", "remote radio heads (RRHs)", "transmitting/receiving points", and so on. Hereinafter the radio base stations 11 and 12 will be collectively referred to as "radio base stations 10", unless specified otherwise.

The user terminals 20 are terminals to support various communication schemes such as LTE, LTE-A, and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. The uplink and downlink radio access methods are not limited to combinations of these, and other radio access methods may be used.

In the radio communication system 1, a downlink shared channel (Physical Downlink Shared Channel (PDSCH)), which is used by each user terminal 20 on a shared basis, a broadcast channel (Physical Broadcast Channel (PBCH)), downlink L1/L2 control channels, and so on are used as downlink channels. User data, higher layer control information, and system information blocks (SIBs) are communicated in the PDSCH. Further, a master information block (MIB) is transmitted by PBCH.

The downlink L1/L2 control channels include at least one of a downlink control channel (physical downlink control channel (PDCCH) and/or enhanced physical downlink control channel (EPDCCH)), a physical control format indicator channel (PCFICH), and a physical hybrid-ARQ indicator channel (PHICH). Downlink control information (DCI), including PDSCH and/or PUSCH scheduling information, and so on, is communicated by the PDCCH.

Note that scheduling information may be reported via DCI. For example, the DCI to schedule receipt of DL data may be referred to as "DL assignment", and the DCI to schedule transmission of UL data may be referred to as "UL grant".

The number of OFDM symbols to use for the PDCCH is communicated by the PCFICH. Hybrid automatic repeat request (HARQ) delivery acknowledgment information (also referred to as, for example, "retransmission control information", "HARQ-ACKs", "ACK/NACKs", and so on) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)), and so on are used as uplink channels. User data, higher layer control information, and so on are communicated by the PUSCH. Also, in the PUCCH, downlink radio link quality information (Channel Quality Indicator (CQI)), delivery acknowledgement information, scheduling requests (SRs), and so on are communicated. By means of the PRACH, random access preambles for establishing connections with cells are communicated.

In the radio communication systems 1, cell-specific reference signals (CRSs), channel state information reference signals (CSI-RSs), demodulation reference signals (DMRSs), positioning reference signals (PRSs), and so on are communicated as downlink reference signals. Also, in the radio communication system 1, measurement reference signals (Sounding Reference Signals (SRSs)), demodulation reference signals (DMRSs), and so on are communicated as uplink reference signals. Note that, DMRSs may be referred to as "user terminal-specific reference signals (UE-specific Reference Signals)." Also, the reference signals to be communicated are by no means limited to these.

### <Radio Base Station>

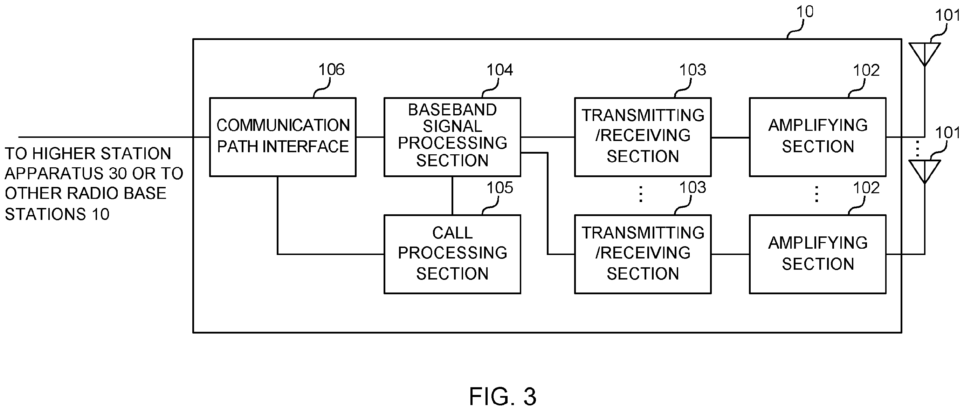

Fig. 3 is a diagram to show an example of an overall structure of a radio base station according to one embodiment. A radio base station 10 includes a plurality of transmitting/receiving antennas 101, amplifying sections 102, and transmitting/receiving sections 103, a baseband signal processing section 104, a call processing section 105, and a communication path interface 106. Each of the transmitting/receiving antennas 101, the amplifying sections 102, and the transmitting/receiving sections 103 may be composed to include one or more thereof.

User data to be transmitted from the radio base station 10 to the user terminal 20 by the downlink is input from the host station apparatus 30 to the baseband signal processing section 104 via the communication path interface 106.

In the baseband signal processing section 104, the user data is subjected to transmission processing, including processing of a packet data convergence protocol (PDCP) layer, division and coupling of the user data, radio link control (RLC) layer transmission processing such as RLC retransmission control, medium access control (MAC) retransmission control (for example, HARQ transmission processing), scheduling, transmission format selection, channel coding, inverse fast Fourier transform (IFFT) processing, and precoding processing, and a result is transferred to each transmitting/receiving section 103. Furthermore, downlink control signals are also subjected to transmission processing such as channel coding and inverse fast Fourier transform, and are transferred to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving section 103 can be constituted by a transmitter/receiver, a transmitting/receiving circuit, or a transmitting/receiving apparatus, which is described based on general understanding of the technical field to which the present disclosure pertains. The transmitting/receiving section 103 may be composed of an integrated transmitting/receiving section, or may be composed of a transmitting unit and a receiving section.

Meanwhile, as for each uplink signal, a radio frequency signal received by the transmitting/receiving antenna 101 is amplified by the amplifying section 102. The transmitting/receiving section 103 receives the uplink signal amplified by the amplifying section 102. The transmitting/receiving section 103 performs frequency conversion for the received signal into the baseband signal, and outputs the baseband signal to the baseband signal processing section 104.

In the baseband signal processing section 104, user data included in the input uplink signal is subjected to fast Fourier transform (FFT) processing, inverse discrete Fourier transform (IDFT) processing, error correction decoding, receiving processing for MAC retransmission control, and receiving processing for an RLC layer and a PDCP layer, and the uplink data is transferred to the host station apparatus 30 via the communication path interface 106. The call processing section 105 performs call processing (such as setting and releasing) for communication channels, manages states of the radio base stations 10, manages the radio resources, and so on.

The communication path interface 106 transmits and receives signals to and from the higher station apparatus 30 via a given interface. Moreover, the communication path interface 106 may transmit and receive (perform backhaul signaling for) signals with other radio base stations 10 via an inter-base station interface (for example, optical fiber in compliance with common public radio interface (CPRI), and the X2 interface).

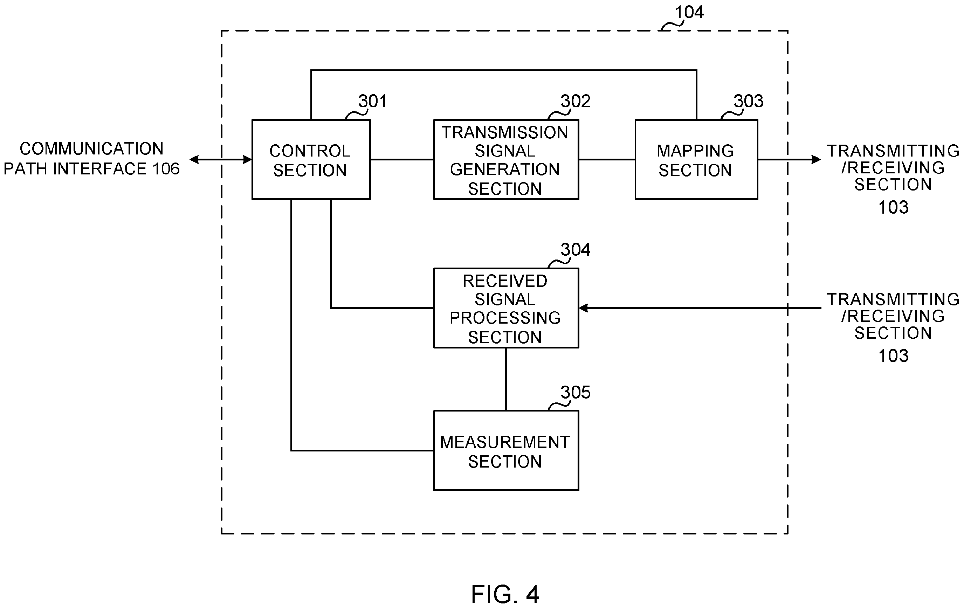

Fig. 4 is a diagram to show an example of a functional structure of a radio base station according to one embodiment. Note that, although this example will primarily show functional blocks that pertain to characteristic parts of the present embodiment, the radio base station 10 may be assumed to have other functional blocks that are necessary for radio communication as well.

The baseband signal processing section 104 includes at least a control section (scheduler) 301, a transmission signal generation section 302, a mapping section 303, a received signal processing section 304, and a measurement section 305. These configurations just need to be included in the radio base station 10, and some or all of the configurations need not be included in the baseband signal processing section 104.

The control section (scheduler) 301 controls the whole of the radio base station 10. The control section 301 can be composed of a controller, a control circuit, or a control apparatus, which is described based on general understanding of the technical field to which the present disclosure pertains.

For example, the control section 301 controls the generation of signals in the transmission signal generation section 302, the allocation of signals in the mapping section 303, and the like. Moreover, the control section 301 controls the receiving processing for signals in the received signal processing section 304, measurement of signals in the measurement section 305, and the like.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals, and the like based on results of determining whether or not retransmission control is necessary for uplink data signals, and the like.

The control section 301 controls scheduling of synchronization signals (for example, PSS/SSS), downlink reference signals (for example, CRS, CSI-RS, DMRS), and so on.

The transmission signal generation section 302 generates the downlink signals (downlink control signals, downlink data signals, downlink reference signals, and the like) based on an instruction from the control section 301, and outputs the generated downlink signals to the mapping section 303. The transmission signal generation section 302 can be composed of a signal generator, a signal generating circuit, or a signal generating apparatus, which is described based on general understanding of the technical field to which the present disclosure pertains.

For example, the transmission signal generation section 302 generates DL assignments, which report downlink data allocation information, and/or UL grants, which report uplink data allocation information, based on the instruction from the control section 301. DL assignments and UL grants are both DCI, and follow the DCI format. Also, the downlink data signals are subjected to the coding process, the modulation process, and so on, by using coding rates and modulation schemes that are determined based on, for example, channel state information (CSI) reported from each user terminal 20.

The mapping section 303 maps the downlink signals, which are generated in the transmission signal generation section 302, to given radio resources based on instructions from the control section 301, and outputs the mapped downlink signals to the transmitting/receiving sections 103. The mapping section 303 can be constituted by a mapper, a mapping circuit, or a mapping apparatus, which is described based on general understanding of the technical field to which the present disclosure pertains.

The received signal processing section 304 performs receiving processing (for example, demapping, demodulation, decoding, and the like) for received signals input from the transmitting/receiving section 103. Here, the received signals include, for example, uplink signals transmitted from the user terminals 20 (uplink control signals, uplink data signals, uplink reference signals, etc.). The received signal processing section 304 can be composed of a signal processor, a signal processing circuit, or a signal processing apparatus, which is described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Further, the received signal processing section 304 outputs the received signals and/or the signals already subjected to the receiving processing to the measurement section 305.

The measurement section 305 conducts measurements for the received signals. The measurement section 305 can be composed of a measurer, a measurement circuit, or a measurement apparatus, which is described based on common understanding of the technical field to which the present disclosure pertains.

For example, the measurement section 305 may perform radio resource management (RRM) measurement, channel state information (CSI) measurement, and the like based on the received signals. The measurement section 305 may measure the received power (for example, reference signal received power (RSRP)), the received quality (for example, reference signal received quality (RSRQ), signal to interference plus noise ratio (SINR), signal to noise ratio (SNR), etc.), the signal strength (for example, received signal strength indicator (RSSI)), transmission path information (for example, CSI), and so on. The measurement results may be output to the control section 301.

The transmitting/receiving section 103 may transmit a physical downlink shared channel (PDSCH) and a demodulation reference signal (DMRS) for the PDSCH. The transmitting/receiving section 103 may receive a physical uplink shared channel (PUSCH) and a demodulation reference signal (DMRS) for the PUSCH.

The transmitting/receiving section 103 may receive uplink control information (UCI) multiplexed and transmitted in at least one of a plurality of uplink channels (for example, PUCCH and PUCCH, or PUCCH and PUSCH) that overlap in a certain slot.

The control section 301 may predict that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determine either or both of the X and the Y on the basis of a length of the UCI to be multiplexed.

### <User Terminal>

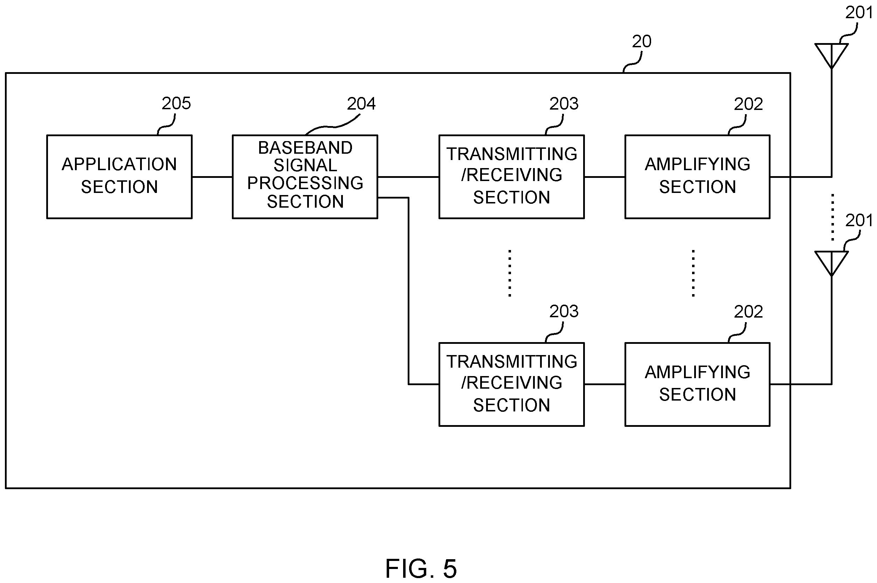

Fig. 5 is a diagram to show an example of an overall structure of a user terminal according to one embodiment. The user terminal 20 includes a plurality of transmitting/receiving antennas 201, amplifying sections 202, and transmitting/receiving sections 203, a baseband signal processing section 204, and an application section 205. Each of the transmitting/receiving antennas 201, the amplifying sections 202, and the transmitting/receiving sections 203 may be composed to include one or more thereof.

A radio frequency signal received in the transmitting/receiving antenna 201 is amplified in the amplifying section 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit, or a transmitting/receiving apparatus, which is described based on general understanding of the technical field to which the present disclosure pertains. The transmitting/receiving section 203 may be composed of an integrated transmitting/receiving section, or may be composed of a transmitting section and a receiving section.

The baseband signal processing section 204 performs FFT processing, error correction decoding, retransmission control receiving processing, and the like for the input baseband signals. Downlink user data is forwarded to the application section 205. The application section 205 performs processes related to higher layers above the physical layer and the MAC layer, and so on. Further, in the downlink data, broadcast information may also be transferred to the application section 205.

Meanwhile, the uplink user data is input from the application section 205 to the baseband signal processing section 204. In the baseband signal processing section 204, transmission processing (for example, transmission processing for HARQ) for the retransmission control, channel coding, precoding, discrete Fourier transform (DFT) processing, IFFT processing, and the like are performed for the uplink user data, and the uplink user data is transferred to each of the transmitting/receiving sections 203.

Each of the transmitting/receiving sections 203 converts the baseband signal, which is output from the baseband signal processing section 204, into signal in a radio frequency band, and transmits such a radio frequency signal. The radio frequency signals having been subjected to frequency conversion in the transmitting/receiving sections 203 are amplified in the amplifying sections 202, and transmitted from the transmitting/receiving antennas 201.

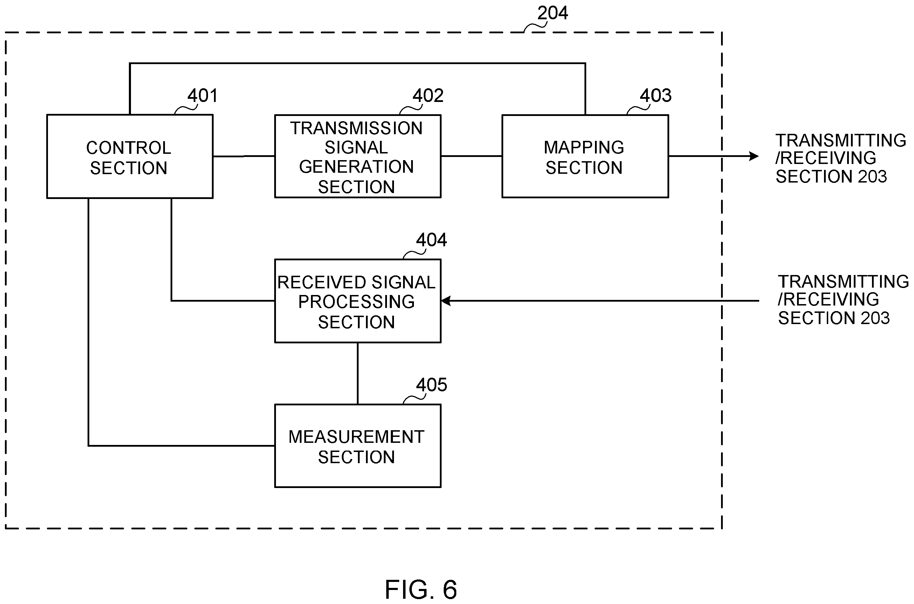

Fig. 6 is a diagram to show an example of a functional structure of a user terminal according to one embodiment. Note that, although this example will primarily show functional blocks that pertain to characteristic parts of the present embodiment, it may be assumed that the user terminals 20 have other functional blocks that are necessary for radio communication as well.

The baseband signal processing section 204 provided in the user terminal 20 includes at least a control section 401, a transmission signal generation section 402, a mapping section 403, a received signal processing section 404, and a measurement section 405. These configurations just need to be included in the user terminal 20, and some or all of the configurations need not be included in the baseband signal processing section 204.

The control section 401 controls the whole of the user terminal 20. The control section 401 can be composed of a controller, a control circuit, or a control apparatus, which is described based on general understanding of the technical field to which the present disclosure pertains.

For example, the control section 401 controls the generation of signals in the transmission signal generation section 402, the allocation of signals in the mapping section 403, and the like. Furthermore, the control section 401 controls the signal receiving processes in the received signal processing section 404, the measurements of signals in the measurement section 405, and so on.

The control section 401 acquires the downlink control signals and downlink data signals, which are transmitted from the radio base station 10, from the received signal processing section 404. The control section 401 controls the generation of uplink control signals and/or uplink data signals based on results of determining whether or not retransmission control is necessary for the downlink control signals and/or the downlink data signals.

Further, when the control section 401 acquires various information reported from the radio base station 10 from the received signal processing section 404, the control section 401 may update the parameter used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be composed of a signal generator, a signal generating circuit, or a signal generating apparatus, which is described based on general understanding of the technical field to which the present disclosure pertains.

For example, the transmission signal generation section 402 generates uplink control signals related to delivery acknowledgement information, channel state information (CSI), and so on, based on commands from the control section 401. Also, the transmission signal generation section 402 generates uplink data signals based on commands from the control section 401. For example, when a UL grant is included in the downlink control signal reported from the radio base station 10, the transmission signal generation section 402 is instructed by the control section 401 to generate an uplink data signal.

The mapping section 403 maps the uplink signals generated in the transmission signal generation section 402 to radio resources based on commands from the control section 401, and outputs the result to the transmitting/receiving section 203. The mapping section 403 can be composed of a mapper, a mapping circuit, or a mapping apparatus, which is described based on general understanding of the technical field to which the present disclosure pertains.

The received signal processing section 404 performs receiving processing (for example, demapping, demodulation, decoding, and the like) for received signals input from the transmitting/receiving section 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit, or a signal processing apparatus, which is described based on general understanding of the technical field to which the present disclosure pertains. Also, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI, and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit, or a measurement apparatus, which is described based on general understanding of the technical field to which the present disclosure pertains.

For example, the measurement section 405 may perform RRM measurements, CSI measurements, and so on based on the received signals. The measurement section 405 may measure the received power (for example, RSRP), the received quality (for example, RSRQ, SINR, SNR, etc.), the signal strength (for example, RSSI), transmission path information (for example, CSI), and so on. The measurement results may be output to the control section 401.

The transmitting/receiving section 203 may multiplex and transmit uplink control information (UCI) in at least one of a plurality of uplink channels (for example, PUCCH and PUCCH, or PUCCH and PUSCH) that overlap in a certain slot.

The control section 401 may predict that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determine either or both of the X and the Y on the basis of a length of the UCI to be multiplexed.

### (Hardware configuration)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be achieved by a single apparatus physically or logically aggregated, or may be achieved by directly or indirectly connecting two or more physically or logically separate apparatuses (using wires, radio, or the like, for example) and using these plural apparatuses.

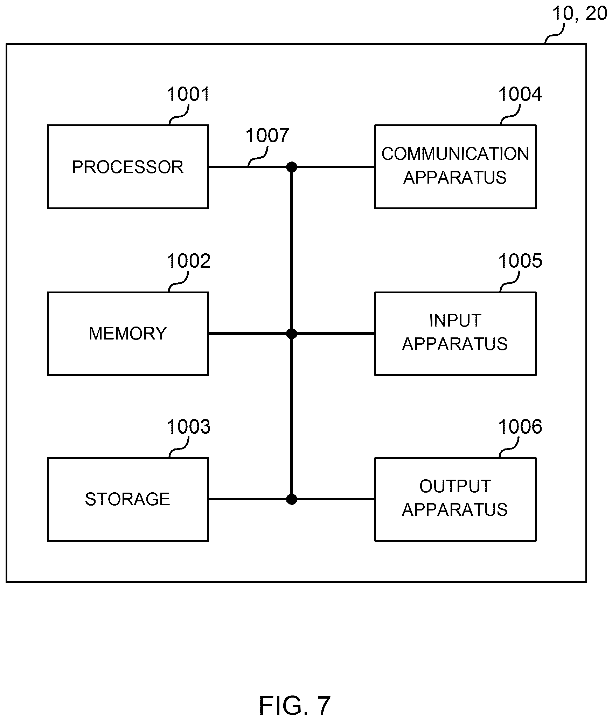

For example, the radio base station, user terminals, and so on according to embodiments of the present disclosure may function as a computer that executes the processes of the radio communication method of the present disclosure. Fig. 7 is a diagram to show an example hardware structure of a radio base station and a user terminal according to one embodiment. Physically, the above-described radio base stations 10 and user terminals 20 may be formed as a computer apparatus that includes a processor 1001, a memory 1002, a storage 1003, a communication apparatus 1004, an input apparatus 1005, an output apparatus 1006, and a bus 1007.

Note that, in the following description, the word "apparatus" may be replaced by "circuit", "device", "unit", and so on. The hardware configuration of each of the radio base station 10 and the user terminal 20 may be composed so as to include one or plurality of each apparatus illustrated in the drawing, or may be composed so as not to include a part of the apparatuses.

For example, although only one processor 1001 is illustrated, a plurality of processors may be provided. Furthermore, the processing may be executed by one processor, or the processing may be executed in sequence or in different manners by one or more processors. Note that the processor 1001 may be implemented with one or more chips.

Each function of the radio base station 10 and the user terminal 20 is implemented by reading given software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral apparatuses, a control apparatus, a computing apparatus, a register, and the like. For example, the baseband signal processing section 104 (204), the call processing section 105, and the like, which are mentioned above, may be achieved by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations of the above-described embodiments may be used. For example, the control section 401 of the user terminal 20 may be achieved by a control program that is stored in the memory 1002 and operates in the processor 1001, and other functional blocks may be achieved likewise.

The memory 1002 is a computer-readable recording medium, and may be constituted by, for example, at least one of a read only memory (ROM), an erasable programmable ROM (EPROM), an electrically EPROM (EEPROM), a random access memory (RAM), and/or other appropriate storage media. The memory 1002 may be referred to as a "register", a "cache", a "main memory (primary storage apparatus)", and so on. The memory 1002 can store a program (program code), a software module, and the like, which are executable for implementing the radio communication method according to the embodiment of the present disclosure.

The storage 1003 is a computer-readable recording medium, and for example, may be composed of at least one of a flexible disk, a floppy (registered trademark) disk, a magneto-optical disk (for example, a compact disc (compact disc ROM (CD-ROM) and the like), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be called an auxiliary storage apparatus.

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving antennas 101 (201), the amplifying sections 102 (202), the transmitting/receiving sections 103 (203), the communication path interface 106, and the like, which are mentioned above, may be achieved by the communication apparatus 1004.

The input apparatus 1005 is an input device for receiving input from the outside (for example, a keyboard, a mouse, a microphone, a switch, a button, a sensor, and so on). The output apparatus 1006 is an output device for allowing sending output to the outside (for example, a display, a speaker, a light emitting diode (LED) lamp, and so on). The input apparatus 1005 and the output apparatus 1006 may have an integrated configuration (for example, a touch panel).

Furthermore, these pieces of apparatus, including the processor 1001, the memory 1002, and so on are connected by the bus 1007 so as to communicate information. The bus 1007 may be composed using a single bus, or may be composed using buses different between the apparatuses.

Also, the radio base station 10 and the user terminal 20 may be configured to include hardware such as a microprocessor, a digital signal processor (DSP), an application-specific integrated circuit (ASIC), a programmable logic device (PLD), and a field programmable gate array (FPGA), and all or some of the functional blocks may be implemented by the hardware. For example, the processor 1001 may be implemented with at least one of these pieces of hardware.

### (Variations)

Note that the terminology used in the present disclosure and the terminology that is needed to understand the present disclosure may be replaced by other terms that convey the same or similar meanings. For example, at least one of "channels" and "symbols" may be replaced by "signals" (or "signaling"). The signal may also be a message. A reference signal may be abbreviated as an "RS", and may be referred to as a "pilot", a "pilot signal", and so on, depending on which standard applies. Furthermore, a component carrier (CC) may be referred to as "cell", "frequency carrier", "carrier frequency", or the like.

Furthermore, a radio frame may be comprised of one or more periods (frames) in the time domain. Each of one or more periods (frames) constituting a radio frame may be referred to as a "subframe". Furthermore, a subframe may be comprised of one or multiple slots in the time domain. A subframe may be a fixed time duration (for example, 1 ms) not dependent on the numerology.

Furthermore, a slot may be comprised of one or more symbols in the time domain (orthogonal frequency division multiplexing (OFDM) symbols, single carrier frequency division multiple access (SC-FDMA) symbols, and so on). Further, the slot may be a unit of time based on numerology.

Also, a slot may include a plurality of minislots. Each minislot may be comprised of one or more symbols in the time domain. Further, the minislot may be called a subslot. A minislot may be composed of fewer symbols than slots. A PDSCH and PUSCH transmitted in a time unit larger than a minislot may be referred to as PDSCH/PUSCH mapping type A. A PDSCH and PUSCH transmitted using a minislot may be referred to as PDSCH/PUSCH mapping type B.

A radio frame, a subframe, a slot, a minislot, and a symbol all represent the time unit in signal communication. A radio frame, a subframe, a slot, a minislot, and a symbol may be called by other applicable names, respectively. For example, one subframe may be called a transmission time interval (TTI), or a plurality of consecutive subframes may be called the TTI, or one slot or minislot may be called the TTI. That is, at least one of a subframe and a TTI may be a subframe (1 ms) in existing LTE, may be a shorter period than 1 ms (for example, one to thirteen symbols), or may be a longer period of time than 1 ms. Note that the unit to represent the TTI may be referred to as a "slot", a "minislot", and so on, instead of a "subframe".

Here, a TTI refers to the minimum time unit of scheduling in radio communication, for example. For example, in LTE systems, a radio base station schedules radio resources (frequency bandwidth and transmission power that can be used in each user terminal, and the like) to allocate to each user terminal on a TTI basis. Note that the definition of TTIs is not limited thereto.

The TTI may be a transmission time unit of channel-encoded data packets (transport blocks), code blocks, codewords, or the like, or may be a unit of processing in scheduling, link adaptation, and so on. Note that, when a TTI is given, the period of time (for example, the number of symbols) in which transport blocks, code blocks, codewords, and so on are actually mapped may be shorter than the TTI.

When one slot or one minislot is called TTI, one or more TTIs (that is, one or more slots or one or more minislots) may be the minimum unit of time of scheduling. Moreover, the number of slots (the number of minislots) which constitute the minimum unit of time of the scheduling may be controlled.

A TTI having a time duration of 1 ms may be referred to as an "usual TTI (TTI in LTE Rel. 8 to 12)", a "normal TTI", a "long TTI", an "usual subframe", a "normal subframe", a "long subframe", and so on. A TTI that is shorter than a usual TTI may be referred to as "shortened TTI", "short TTI", "partial TTI" (or "fractional TTI"), "shortened subframe", "short subframe", "minislot", "subslot", or the like.

The long TTI (for example, the usual TTI, the subframe, and the like) may be replaced by TTI having a time length exceeding 1 ms, and the short TTI (for example, the shortened TTI and the like) may be replaced by TTI having a TTI length less than the TTI length of the long TTI and not less than 1 ms.

The resource block (RB) is the unit of resource allocation in the time domain and the frequency domain, and may include one or plurality of consecutive subcarriers in the frequency domain. Also, an RB may include one or more symbols in the time domain, and may be one slot, one minislot, one subframe, or one TTI in length. One TTI and one subframe may be each comprised of one or more resource blocks. Note that one or more RBs may be referred to as a "physical resource block (Physical RB (PRB))", a "subcarrier group (SCG)", a "resource element group (REG)", a "PRB pair", an "RB pair", and so on.

Furthermore, a resource block may be comprised of one or a plurality of resource elements (REs). For example, one RE may be a radio resource region of one subcarrier and one symbol.

Note that the configurations of radio frames, subframes, slots, minislots, symbols, and the like described above are merely examples. For example, configurations pertaining to the number of subframes included in a radio frame, the number of slots per a subframe or a radio frame, the number of minislots included in a slot, the number of symbols and RBs included in a slot or a minislot, the number of subcarriers included in an RB, the number of symbols in a TTI, the symbol duration, the length of cyclic prefixes (CPs), and the like can be variously changed.

Also, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. For example, since various channels (physical uplink control channel (PUCCH), physical downlink control channel (PDCCH), and so on) and information elements can be identified by any suitable names, the various names assigned to these individual channels and information elements are in no respect limiting.

The information, signals, and/or others described in the present disclosure may be represented by using a variety of different technologies. For example, data, instructions, commands, information, signals, bits, symbols, chips, and the like that may be referenced throughout the above description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals, and the like may be input and output via a plurality of network nodes.

The information, signals, and so on that are input and/or output may be stored in a specific location (for example, in a memory), or may be managed in a control table. The information, signals, and so on to be input and/or output can be overwritten, updated, or appended. The information, signals, and the like that are output may be deleted. The information, signals, and the like, which are input, may be transmitted to other apparatuses.

The reporting of information is by no means limited to the aspects/embodiments described in the present disclosure, and may be performed using other methods. For example, the reporting of information may be implemented by physical layer signaling (for example, downlink control information (DCI), uplink control information (UCI)), higher layer signaling (for example, radio resource control (RRC) signaling, broadcast information (master information block (MIB), system information block (SIB), and the like), and medium access control (MAC) signaling), other signals, or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as "RRC messages," and can be, for example, an RRC connection setup (RRCConnectionSetup) message, RRC connection reconfiguration (RRCConnectionReconfiguration) message, and so on. Moreover, the MAC signaling may be reported using, for example, MAC control elements (MAC CEs) .

Further, reporting of given information (for example, reporting of information to the effect that "X holds") does not necessarily have to be sent explicitly, and may be sent implicitly (for example, by not reporting this given information, or by reporting another piece of information).

Decisions may be made in values represented by one bit (0 or 1), may be made in Boolean values that represent true or false, or may be made by comparing numerical values (for example, comparison against a given value).

Software, whether referred to as "software", "firmware", "middleware", "microcode", or "hardware description language", or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "base station (Base Station (BS))", "radio base station", "fixed station", "NodeB", "eNodeB (eNB)", "gNodeB (gNB)", "access point", "transmission point", "reception point", "transmission/reception point", "cell", "sector", "cell group", "carrier," "component carrier," and "bandwidth part (BWP)", may be used interchangeably. The base station may be called a term such as a macro cell, a small cell, a femto cell, a pico cell, and the like.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (remote radio heads (RRHs))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a subscriber station, mobile unit, subscriber unit, wireless unit, remote unit, mobile device, wireless device, radio communication device, remote device, mobile subscriber station, access terminal, mobile terminal, wireless terminal, remote terminal, handset, user agent, mobile client, client, or some other suitable terms.

At least one of the base station and the mobile station may be called a transmitting device, a receiving device, or the like. Note that at least one of a base station and a mobile station may be a device mounted on a moving body, a moving body itself, and so on. The moving body may be a transportation (for example, a car, an airplane, and so on), an unmanned moving body (for example, a drone, an autonomous car, and so on), or a (manned or unmanned) robot. Note that at least one of the base station and the mobile station also includes a device that does not necessarily move during a communication operation.

Furthermore, the radio base stations in the present disclosure may be replaced by user terminals. For example, each aspect/embodiment of the present disclosure may be applied to a configuration in which communication between a radio base station and a user terminal is replaced by communication among a plurality of user terminals (which may be referred to as, for example, device-to-device (D2D), vehicle-to-everything (V2X), and so on). In this case, the user terminal 20 may have the functions of the radio base station 10 described above. In addition, terms such as "uplink" and "downlink" may be read as a term corresponding to communication between terminals (for example, "side"). For example, an uplink channel may be read as a side channel.

Likewise, the user terminals in the present disclosure may be read as radio base stations. In this case, the radio base stations 10 may have the functions of the user terminals 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, mobility management entities (MMEs), serving-gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various steps have been described in the present disclosure with various components of steps in exemplary orders, the specific orders that are described in the present disclosure are by no means limiting.

The aspects/embodiments illustrated in the present disclosure may be applied to long term evolution (LTE), LTE-advanced (LTE-A), LTE-byond (LTE-B), SUPER 3G, IMT-Advanced, 4th generation mobile communication system (4G), 5th generation mobile communication system 5G), future radio access (FRA), new-radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), systems that use other adequate radio communication methods, and/or next-generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on".

Reference to elements with designations such as "first", "second", and so on as used in the present disclosure does not generally limit the number/quantity or order of these elements. These designations are used in the present disclosure only for convenience, as a method for distinguishing between two or more elements. Hence, references of first and second elements do not mean that only two elements are adoptable, or that the first element must precede the second element in some way.

The term "determining" as used in the present disclosure may encompass a wide variety of actions. For example, "determining" may be regarded as "determining" judging, calculating, computing, processing, deriving, investigating, looking up (for example, looking up in a table, database, or another data structure), ascertaining, and the like.

Furthermore, to "determine" as used herein may be interpreted to mean making "determinations" related to receiving (for example, receiving information), transmitting (for example, transmitting information), inputting, outputting, accessing (for example, accessing data in a memory), and so on.

In addition, to "determine" as used herein may be interpreted to mean making "determinations" related to resolving, selecting, choosing, establishing, comparing, and so on. In other words, to "determine" as used in the present disclosure may be interpreted to mean making "determinations" related to some action.

In addition, to "determine" as used herein may be read as "assuming", "expecting", "considering", and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

In the present disclosure, when two elements are connected to each other, these elements can be considered "connected" or "coupled" to each other by using one or more electrical wires, cables, printed electrical connections, and the like, and, as a number of non-limiting and non-inclusive examples, by using electromagnetic energy having wavelengths in a radio frequency domain, a microwave domain, an optical (both visible and invisible) domain, and the like.

In the present disclosure, the phrase "A and B are different" may mean "A and B are different from each other". The terms such as "leave", "coupled", and the like may be interpreted as well.

When the terms such as "include", "including", and variations of these are used in the present disclosure or claims, these terms are intended to be inclusive, in a manner similar to the way the term "comprising" is used. Furthermore, the term "or" as used in the present disclosure or in claims is intended to be not an exclusive disjunction.

For example, when articles, such as "a", "an", and "the" in English, are added by translation in the present disclosure, the present disclosure may include that nouns which follows these articles are in plural.

### (Note)

The supplementary items of the present disclosure will be additionally described.

Timeline requirement for multiplexing PUCCH+PUCCH or PUCCH+PUSCH.

PUCCH and PUCCH/ PUCCH and PUSCH are multiplexed.

N1+X and N2+Y are secured. The time from the last symbol of DCI/PDSCH to the first symbol of PUCCH/PUSCH. X and Y are to secure the processing time of the UE. X and Y are FFS.

Proposal 1. Either or both of X and Y are determined by the length of the UCI.

The method of coding changes depending on the length of the UCI; X/Y is changed accordingly.

The longer the UCI is, the longer X and Y are set. However, this is not limitation.

This may be applied in the case of PUCCH+PUCCH or PUCCH+PUSCH.

Proposal2. The above proposal is used for PUCCH+PUCCH, and another method is used for PUSCH+PUCCH.
Alt1: proposal1 is applied in the case of PUCCH+PUCCH, and d1,1, d1,2, d1,3, d2,1, and d2,2 are applied in the case of PUSCH+PUCCH.
Alt2: proposal1 is applied in the case of PUCCH+PUCCH, and the following is applied in the case of PUSCH+PUCCH.

Divide by the base graph (BG) 1/2 of the LDPC (TS38.212, Sect.6.2), BG2 is longer than BI1.

At the time of BG2, X and Y are set longer than at the time of BG1. However, this is not limitation.

The change is made in both BG and UCI length.

Considering the above, the configuration as below is proposed.

### [Configuration 1]

A user terminal including:
a transmitting section that multiplexes and transmits uplink control information (UCI) on at least one of a plurality of uplink channels that overlap in a slot; and
a control section that predicts that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determines either or both of the X and the Y on the basis of a length of the UCI to be multiplexed.

### [Configuration 2]

A radio communication method of a user terminal including:
a step of multiplexing and transmitting uplink control information (UCI) on at least one of a plurality of uplink channels that overlap in a slot; and
a step of predicting that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determining either or both of the X and the Y on the basis of a length of the UCI to be multiplexed.

Now, although the invention according to the present disclosure has been described in detail above, it should be obvious to a person skilled in the art that the invention according to the present discloser is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2018-109844 filed on May 22, 2018. All of this content is included here.

## Claims

1. A user terminal comprising:
a transmitting section that multiplexes and transmits uplink control information (UCI) on at least one of a plurality of uplink channels that overlap in a slot; and
a control section that predicts that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determines either or both of the X and the Y on the basis of a length of the UCI to be multiplexed.

2. A radio communication method of a user terminal comprising:
a step of multiplexing and transmitting uplink control information (UCI) on at least one of a plurality of uplink channels that overlap in a slot; and
a step of predicting that the first symbol that is the earliest uplink channel among the plurality of uplink channels is not before symbol N₁+X after the last symbol of any corresponding downlink shared channel (PDSCH), and is not before symbol N₂+Y after the last symbol of any corresponding downlink control channel (PDCCH), and here, determining either or both of the X and the Y on the basis of a length of the UCI to be multiplexed.
